# EUROPÄISCHE PATENTSCHRIFT

(11) **EP 2 935 023 B1**
(45) Veröffentlichungstag und Bekanntmachung des Hinweises auf die Patenterteilung: **31.01.2018**
(21) Anmeldenummer: 13805776.5
(22) Anmeldetag: 04.12.2013
(51) Int. Cl.: B65B 57/04, B65B 61/18, G01N 21/89, B65B 19/22, B65H 39/16, B65H 23/02, B65H 26/02

(54) **VERFAHREN UND VORRICHTUNG ZUR HERSTELLUNG VON AUSSENUMHÜLLUNGEN**
METHOD AND APPARATUS FOR PRODUCING OUTER WRAPPERS
MÉTHODE ET DISPOSITIF DE PRODUCTION D'ENVELOPPES EXTERNES

(30) Priorität: 21.12.2012 DE 102012025158
(43) Veröffentlichungstag der Anmeldung: 28.10.2015
(73) Patentinhaber: Focke & Co. (GmbH & Co. KG), 27283 Verden (DE)
(72) Erfinder: DRÜCKE, Dirk, 28207 Bremen (DE)
(74) Vertreter: Aulich, Martin
(86) Internationale Anmeldenummer: PCT/EP2013/003649
(87) Internationale Veröffentlichungsnummer: WO 2014/094980

(56) Entgegenhaltungen:
- EP-A1- 0 729 025
- EP-A2- 0 952 082
- WO-A1-2004/033305
- DE-A1- 19 827 190

## Beschreibung

Die vorliegende Erfindung betrifft die Herstellung von Außenumhüllungen von Zigarettenpackungen. Im Rahmen der Herstellung von Zigarettenpackungen werden die aus Papier- bzw. Karton-Zuschnitten bestehenden Zigarettenpackungen in eine Außenumhüllung aus in der Regel transparenter Folie eingehüllt. Auf dieser Folie ist ein sogenannter Aufreißstreifen angebracht. Ein Endverbraucher, der eine Zigarettenpackung mit einer solchen Außenumhüllung öffnen möchte, kann die Umhüllung in einfacher Weise entfernen, indem er den Aufreißstreifen an einem laschenartigen Ende greift, an diesem Ende zieht und so die Umhüllung entlang des Aufreißstreifens auftrennt.
Bei der Herstellung der Außenumhüllung wird ein fortlaufender Aufreißstreifen bzw. eine Aufreißstreifenbahn zu einer Verbindungsstation transportiert und dort mit einer Folienbahn zu einer Verbundmaterialbahn aus Folie und Aufreißstreifen verbunden. Die Verbundmaterialbahn wird anschließend unter Beaufschlagung mit Zugkräften durch mindestens eine Vorzugswalze zur weiteren Handhabung weitertransportiert, insbesondere zur nachfolgenden Trennung in einzelne Zuschnitte für die spätere Zigarettenpackung.

Die Zugkräfte verursachen Bahnspannungen in der Folienbahn und in dem Aufreißstreifen, infolge derer diese gedehnt werden. Falls die Folienbahn und der Aufreißstreifen vor dem Verbinden unterschiedlich stark gedehnt werden, kommt es nach dem Einbringen von der Ausbildung der laschenartigen Enden dienenden Einschnitte in die Verbundmaterialbahn zu einer Faltenbildung entweder der Folienbahn oder des Aufreißstreifens. Dies aufgrund unterschiedlichen Schrumpfungsverhaltens des Aufreißsteifens einerseits und der Folie andererseits, sobald infolge des jeweiligen Einschnitts die Zugkräfte wegfallen, die zuvor während des Transports der Verbundmaterialbahn auf den von dem Einschnitt betroffenen Verbundmaterialbahnstreifen wirkten.

Unabhängig davon ist es wichtig, die Position des Aufreißstreifens auf der Außenumhüllung während der Fertigung der Verpackungen zu kontrollieren. Regelmäßig erfolgt die Kontrolle, bevor die Außenumhüllung um die jeweilige Packung herum gefaltet wird. Insbesondere, wenn nicht nur die Außenumhüllung selbst, sondern auch der Aufreißstreifen aus transparentem Folienmaterial besteht, ist eine optoelektronische Detektion des Streifens auf der Folie schwierig.

Es ist bekannt, zu diesem Zweck eine im Reflexionsverfahren arbeitende Lichtschranke einzusetzen. Eine Sensoreinheit mit einem Lichtgeber und einem als Fotodiode ausgebildetem Empfänger ist dabei derart benachbart zu der einen Seite des Folienmaterials angeordnet, dass das Licht des Lichtgebers die Folie durchstrahlt und auf einen benachbart zu der anderen Seite der Folie angeordneten Reflektor trifft. Der Reflektor reflektiert dann das Licht in Richtung der Diode, die das Licht nach erneutem Durchstrahlen empfängt. Der auf der Folie sitzende Aufreißstreifen beeinflusst das auf die Diode treffende Signal. Wenn in dem Prüfbereich, den die Sensoreinheit abtastet, der Aufreißstreifen vorhanden ist, erzeugt die Diode ein anderes Signal, als wenn der Aufreißfaden fehlt.

Nachteilig bei diesem Verfahren ist unter anderem, dass die Sensoreinheit bei Produktwechseln aufwendig angelernt werden muss. So müssen beispielsweise Schwellwerte, ab denen Intensitätsveränderungen des reflektierten Lichtsignals von der Auswerteelektronik als Fehler gewertet werden, jeweils an die Art der eingesetzten Folie bzw. des eingesetzten Aufreißstreifens angepasst werden. Zudem ist es nicht möglich, die Position des Aufreißstreifens auf der Folie exakt zu detektieren. Die Sensoreinheit erkennt nur, ob ein Aufreißstreifen vorhanden ist oder nicht. Beispielsweise ein ungewollter Schrägverlauf des Aufreißstreifens auf der Folie kann daher nicht erfasst werden. Jedenfalls nicht innerhalb der Grenzen, in denen die Sensoreinheit den Aufreißstreifen als "vorhanden" erkennt.

Die EP 0 952 082 A2 zeigt, ein Verfahren (und die entsprechende Vorrichtung) zur Überwachung von Außenumhüllungen für Verpackungen für rauchbare Artikel mit darauf angeordnetem Aufreißstreifen. Die EP 0 952 082 A2 zeigt ferner, dass die Verbundmaterialbahn mit einem Zeilensensor überwacht wird. Es ist Aufgabe der vorliegenden Erfindung, das eingangs genannte Verfahren sowie die eingangs genannte Vorrichtung weiterzuentwickeln.
Diese Aufgabe wird gelöst durch ein Verfahren mit den Merkmalen des Anspruchs 1 sowie eine Vorrichtung zur Durchführung dieses Verfahrens mit den Merkmalen des Anspruchs 8.

Danach werden erfindungsgemäß die Verbundmaterialbahn oder einzelne Zuschnitte der Verbundmaterialbahn daraus stromab der Verbindungsstation mit einem insbesondere elektrooptischen Prüforgan, bevorzugt einem Zeilensensor, im Hinblick auf die Bildung von Falten überwacht. Sollte bei der Überwachung festgestellt werden, dass eine Faltenbildung aufgetreten ist bzw. eine Faltenbildung, die sich außerhalb eines tolerierbaren Rahmens befindet, wird während des laufenden Prozesses die Bahnspannung der Aufreißstreifenbahn verändert, die diese bei der Zuführung zur Verbindungsstation aufweist. Hierzu wird automatisch mindestens eine Einrichtung zur Einstellung der Bahnspannung geeignet gesteuert. Und zwar derart, dass der Faltenbildung entgegengewirkt wird bzw. diese reduziert wird.
Hinweis: Im Rahmen dieser Anmeldung sind "und" und "oder" in der Formulierung "und/oder" als Alternativen zu verstehen im Sinne von "und" oder "oder".
Eine Verringerung der Bahnspannung des Aufreißstreifens beispielsweise durch eine geeignete Bahnspannungseinstelleinrichtung würde bei gleich bleibender Bahnspannung der Folienbahn dazu führen, die Dehnung des Aufreißstreifens zu verringern, der diese während der Verbindung mit der Folienbahn unterliegt und somit auch das Maß der Schrumpfung zu verkleinern, das der Aufreißstreifen bei Wegfall von insbesondere durch eine Vorzugswalze aufgebrachten Zugkräften vollzieht.
Es ist auch denkbar, zusätzlich die Bahnspannung der Folienbahn entsprechend zu verändern, um der Faltenbildung entgegenzuwirken. Auch der Folienbahn ist dann eine entsprechende Einrichtung zur Einstellung der Bahnspannung zugeordnet.
Insgesamt kann einer von Null verschiedenen Stärke der Faltenbildung entgegengewirkt wird, indem letztlich die Differenz zwischen dem Dehnungswert der Aufreißstreifenbahn einerseits und dem Dehnungswert der Folienbahn andererseits, die in diesem Fall bei Verbindung derselben besteht, durch Verringerung der Differenz der jeweiligen Bahnspannungen verringert wird.

Die Einstellung der jeweiligen Bahnspannung erfolgt regelmäßig über das Aufbringen spezifischer Zugkräfte auf die jeweilige Bahn.

Eine Einrichtung zur spezifischen Einstellung der Bahnspannung umfasst dabei bevorzugt Mittel, mit denen auf die jeweilige Bahn, entweder die Folienbahn oder die Aufreißstreifenbahn, zusätzlich zu den von der oder den Vorzugswalzen aufgebrachten Zugkräften bedarfsweise weitere Zugkräfte aufgebracht werden können. Solche Mittel können beispielsweise ein im Stand der Technik bekanntes Tänzersystem umfassen. Dabei kann die Stärke der aufgebrachten Zugkräfte mittels eines geeigneten Stellorgans des Tänzersystems variiert bzw. eingestellt werden.

Bevorzugt wird die Bahnspannung nach Maßgabe des Grades bzw. der Stärke der von dem Prüforgan erfassten Faltenbildung verändert. Als Maß für die Stärke der Faltenbildung könnte beispielsweise die Anzahl der Falten der Faltenbildung pro Längeneinheit dienen, insbesondere pro Zuschnitt bzw. pro gedachtem Zuschnitt. Zusätzlich oder alternativ könnten die Abmessungen von Falten der Faltenbildung als Maß verwendet werden, insbesondere die Erstreckung der erfassten Falten quer zur Längserstreckung der Verbundmaterialbahn. Diese vorgenannten Messgrößen könnten ggf. mittels einer geeigneten Auswerteeinrichtung bestimmt werden, die die Signale des die Faltenbildung erfassenden Prüforgans entsprechend auswertet.

Als Maß für die Stärke der Faltenbildung können auch unmittelbar von den Signalen des Prüforgans abgeleitete Werte dienen. So kann beispielsweise vorgesehen sein, die Verbundmaterialbahn mit dem Prüforgan pro Längeneinheit der Verbundmaterialbahn mehrfach abzutasten und pro solcher Längeneinheit einen Mittelwert der Messwerte zu bilden. Dieser Mittelwert ist jedenfalls bei Verwendung eines Zeilensensors als Prüforgan direkt abhängig von der Stärke der Faltenbildung pro Längeneinheit.

Da die Faltenbildung von den spezifischen Materialkennwerten des Aufreißstreifens bzw. der Folienbahn abhängt, kann vorgesehen sein, dass für den spezifischen Herstellungsprozess das aktuell zu verwendende Maß automatisch abhängig davon ausgewählt wird, welches spezifische Material in dem Prozess eingesetzt wird. Allgemein gesprochen würde demnach das Maß abhängig von mindestens einem Materialkennwert des Aufreißstreifens und/oder abhängig von mindestens einem Materialkennwert des Folienmaterials ausgewählt werden.

In ähnlicher Weise können auch die Parameter des Reglers des Regelkreises und/oder der Regelungsalgorithmus, den dieser verwendet, automatisch abhängig von mindestens einem Materialkennwert der Folienbahn und/oder abhängig von mindestens einem Materialkennwert des Aufreißstreifens aus einem Speicher bzw. einer Datenbank ausgewählt werden. Solche Regelparameter können beispielsweise die Proportionalverstärkung sein, die Integralverstärkung, die Differentialverstärkung, die Nachstellzeit, die Vorhaltezeit, Verzögerungen T usw.

In einer besonders wichtigen Ausführungsform der Erfindung wird die Stärke (bzw. der Grad) der Faltenbildung mittels eines geschlossenen Regelkreises so geregelt, dass die Stärke einen Minimalwert annimmt oder alternativ so verringert wird, dass sie einen bestimmten Grenzwert erreicht oder unterschreitet. Dabei bildet die Spannung des Aufreißstreifens, insbesondere bewirkt über die Einstellung der auf jeweilige Bahn einwirkenden Zugkraft, die Stellgröße des Regelkreises, die nach Maßgabe der die Regelgröße bildenden Faltenbildungsstärke eingestellt wird.

In weiterer Ausbildung der Erfindung wird die Verbundmaterialbahn durch das Prüforgan stromab eines Schneidorgans überwacht, mit dem in die Folie des Verbundmaterials (kurze) gerade oder gebogene Einschnitte eingebracht werden, die im Wesentlichen quer zur Längserstreckung des Aufreißstreifens zugleich den Aufreißstreifen der Verbundmaterialbahn und den Bereich der Folie durchtrennen, mit dem der Aufreißstreifen verbunden ist. Diese Einschnitte sind so ausgebildet, dass sich laschenartige Enden in dem Verbundmaterial bilden, an denen der Aufreißstreifen und der mit diesem verbundene Folienabschnitt der Folienumhüllung zum späteren Öffnen der Folienumhüllung gegriffen werden kann. Die vorgenannte Überwachung findet deshalb stromab des die Einschnitte einbringenden Schneidorgans statt, da sich Falten bevorzugt im Anschluss an das Einbringen dieser Einschnitte bilden.

In weiterer Ausbildung der Erfindung erfolgt die Überwachung des Verbundmaterials zwischen dem Schneidorgan zum Einbringen der Einschnitte und einem stromab desselben angeordneten Trennorgan, das die Verbundmaterialbahn in einzelne Zuschnitte trennt, in die letztlich jeweils die Zigarettenpackungen als Außenumhüllung einzeln eingewickelt werden.

Weiter kann vorgesehen sein, dass ein den Aufreißstreifen umfassender Prüfbereich des flächigen Folienmaterials mit einem Zeilensensor abgetastet wird. Das von dem Zeilensensor bei einem bzw. dem jeweiligen oder jedem Abtastvorgang gemessene Prüfsignal wird später ausgewertet im Hinblick auf ein oder mehrere charakteristische, von dem Aufreißstreifen hervorgerufene Signalinformationen. Bei solchen Signalinformationen kann es sich beispielsweise um charakteristische Kanten oder Signalspitzen innerhalb des Signals bzw. innerhalb des geeignet weiterverarbeiteten Signals handeln. Bevorzugt wird das Prüfsignal dabei ausgewertet im Hinblick auf das Vorhandensein des Auswertestreifens. Zusätzlich oder alternativ kann das Prüfsignal vorteilhafterweise ausgewertet werden im Hinblick auf die Ist-Position des Aufreißstreifens bzw. von einer oder von beiden Längskanten des Aufreißstreifens auf dem Folienmaterial.

Dieses Prüfen erfolgt bevorzugt unmittelbar im Produktionsprozess, d.h. unmittelbar während der laufenden Herstellung der Verpackungen für rauchbare Artikel.

Dabei ist das Verfahren relativ materialunabhängig. Bei Produktwechseln entfällt ein mühsames Abstimmen der Sensortechnik auf das neue Produkt bzw. der Aufwand hierfür ist wesentlich reduziert.

Das Ausgangssignal des Zeilensensors ist im Grunde - wie dies bei Zeilensensoren üblich ist - zusammengesetzt aus einer Vielzahl von Einzelsignalen, die von den in einer Zeile angeordneten optischen Detektoren bzw. Fotodetektoren (Pixel) stammen. Somit kann dann - anders als im Stand der Technik - das Signal des Zeilensensors ortsaufgelöst daraufhin analysiert werden, ob im Signalverlauf (in der Regel dem ortsabhängigen Lichtintensitätsverlauf) charakteristische Signalspitzen, Kanten etc. vorhanden sind. Bei der Messung im Stand der Technik mittels Fotodiode dagegen ist eine ortsaufgelöste Auswertung des Signals nicht möglich, da schon die Messung prinzipbedingt nicht ortsaufgelöst erfolgt.

Die Verwendung des Zeilensensors ermöglicht daher auch eine exakte Messung der jeweiligen Ist-Position des Aufreißstreifens auf dem Folienmaterial bzw. des jeweils erfassten Abschnitts des Aufreißstreifens. Daher ist es auch möglich, eine Aussage über die genaue Position des Streifens innerhalb des Prüfbereichs und insbesondere innerhalb des Soll-Positionsbereichs zu treffen. Dies ist mit der Methode des Standes der Technik nicht denkbar. Insofern dort der Prüfstreifen innerhalb des von der Diode vorgegebenen Prüfbereichs vorhanden ist, wird das Signal "vorhanden" ausgegeben. Ein etwaiger, nicht gewollter Versatz bzw. Schrägverlauf des Prüfstreifens innerhalb des Prüfbereichs auf dem Folienmaterial kann nicht detektiert werden.

In einer wesentlichen Ausführungsform der Erfindung wird jeweils ein Zuschnitt des Folienmaterials als Außenumhüllung um jeweils eine Packung gefaltet, wobei die Zuschnitte zuvor insbesondere taktweise - entweder jeweils noch verbunden als Teile einer fortlaufenden Materialbahn oder bereits vereinzelt - an dem Zeilensensor vorbeigefördert werden. Dabei werden entweder sämtliche der vorbeigeförderten Zuschnitte bzw. die entsprechenden Prüfbereiche derselben mit dem Zeilensensor abgetastet oder alternativ nur bestimmte ausgewählte Zuschnitte, beispielsweise nur jeder zweite oder nur jeder vierte Zuschnitt (Stichprobe).

Zweckmäßigerweise erstreckt sich der mindestens eine Prüfbereich des jeweiligen Zuschnitts, den der Zeilensensor abtastet, quer zur Soll-Position bzw. zum Soll-Positionsbereich des Aufreißstreifens. Mit anderen Worten verläuft die Zeile des Zeilensensors nicht in Längsrichtung des Aufreißfadens, sondern (natürlich mit Abstand zum Folienmaterial bzw. zum Zuschnitt) quer zu dieser. Regelmäßig wird dabei die Soll-Position bzw. der Soll-Positionsbereich des Aufreißstreifens im Wesentlichen in der Mitte des Prüfbereichs bzw. zentral in dem Prüfbereich angeordnet sein.

Der jeweilige zu prüfende Zuschnitt wird vorteilhafterweise mehrfach hintereinander abgetastet, um möglichst genaue Messergebnisse zu erhalten. Jeder Abtastvorgang erzeugt dabei ein auswertbares Sensorsignal.

Die Mehrfachabtastung kann sich dabei darauf beziehen, dass der Zeilensensor bezogen auf die Richtung der Längserstreckung des Aufreißstreifens nacheinander mehrere unterschiedliche Prüfbereiche des jeweiligen Zuschnitts des Folienmaterials abtastet. Regelmäßig wird hierzu der Zuschnitt bzw. die Folienbahn, deren Teil der Zuschnitt sein kann, relativ zu einem, in diesem Fall ortsfesten, Zeilensensor weitergefördert. Bevorzugt erfolgen dabei der Großteil oder sämtliche der einzelnen Abtastvorgänge während der entsprechenden, regelmäßig taktgemäßen Förderbewegung des jeweiligen Zuschnittes, also bei bewegtem Zuschnitt.

Wenigstens theoretisch ist aber alternativ auch eine Bewegung des Sensors bei ortsfestem Zuschnitt denkbar, um die unterschiedlichen Prüfbereiche nacheinander abtasten zu können. Entsprechend würden die einzelnen Abtastvorgänge erfolgen, während der Sensor entlang des Zuschnitts bewegt wird oder - falls der Zeilensensor diskontinuierlich bewegt wird - in einzelnen Stillstandphasen desselben.

Die Abtastung des jeweiligen Zuschnitts kann auch insofern mehrfach erfolgen, als dass der Zeilensensor ein und denselben Prüfbereich des jeweiligen Zuschnitts mehrfach hintereinander abtastet. In der Auswerteelektronik könnte dann beispielsweise eine zeitliche Mittelung der gemessenen Prüfsignale erfolgen.

Natürlich ist auch eine Kombination der oben genannten Abtastvorgänge möglich, also eine Abtastung mehrerer unterschiedlicher Prüfbereiche eines Zuschnitts, wobei jeder einzelne Prüfbereich mehrfach abgetastet wird.

Falls das Prüfsignal vorbestimmte Kriterien nicht erfüllt, wird ein Fehlersignal erzeugt.

Beispielsweise kann ein Fehlersignal erzeugt werden, falls die Auswertung eines Prüfsignals ergibt, dass in dem Prüfbereich des geprüften Zuschnitts bzw. des geprüften Folienbahnbereichs kein Aufreißstreifen vorhanden ist. Es kann auch vorgesehen sein, ein Fehlersignal zu erzeugen, falls die Ist-Lage des Aufreißstreifens in dem Prüfbereich vorbestimmten Kriterien nicht entspricht, beispielsweise von der Soll-Position abweicht oder sich nicht innerhalb des Soll-Positionsbereichs befindet.

Bevorzugt wird infolge des Fehlersignals der Zuschnitt oder gegebenenfalls die Packung, die der fehlerbehaftete Zuschnitt später als Außenumhüllung umgibt, automatisch aus dem Produktionsbetrieb ausgeschleust.

Falls, wie oben bereits angedeutet, unterschiedliche Prüfbereiche des Zuschnitts abgetastet werden, kann auch vorgesehen sein, dass erst dann ein Fehlersignal erzeugt wird, falls sich bei der Auswertung der in den unterschiedlichen Prüfbereichen jeweils gemessenen Prüfsignale ergibt, dass bei einer vordefinierten Anzahl (größer eins) der abgetasteten Prüfbereiche oder bei einem vorbestimmten Prozentsatz dieser Prüfbereiche kein Aufreißstreifen vorhanden ist. So kann beispielsweise vorgesehen sein, dass 20, 40 oder 100 solcher Prüfbereiche des Zuschnitts abgetastet werden und erst dann, wenn bei einem bestimmten Prozentsatz der Prüfbereiche keine auf den Aufreißfaden zurückzuführende Signalinformation detektiert wird, ein Fehlersignal erzeugt wird.

In ähnlicher Weise kann vorgesehen sein, dass erst dann ein Fehlersignal erzeugt wird, falls sich bei der Auswertung der in den unterschiedlichen Prüfbereichen gemessenen Prüfsignale ergibt, dass die Ist-Lage des Aufreißstreifens nicht nur bei einem Prüfbereich, sondern bei mehreren Prüfbereichen bzw. einer vordefinierten Anzahl von Prüfbereichen (größer eins) den vorbestimmten Kriterien nicht entspricht. Es könnte analog auch vorgesehen sein, dass erst dann ein Fehlersignal erzeugt wird, wenn die Ist-Lage bei einem vorbestimmten Prozentsatz von Prüfbereichen nicht den vorbestimmten Kriterien entspricht.

Die oben erwähnte Mehrfachabtastung des Zuschnitts in Längsrichtung des Zuschnitts bzw. des Aufreißstreifens kann auch dazu genutzt werden, eine fehlerhafte Ausrichtung bzw. einen Versatz des Aufreißstreifens auf dem Zuschnitt zu detektieren. So können für den jeweiligen Zuschnitt aus den in den unterschiedlichen Prüfbereichen jeweils gemessenen Prüfsignalen jeweils in Richtung der Längserstreckung des Aufreißstreifens mehrere Ist-Positionen von einzelnen Teilabschnitten des Aufreißstreifens ermittelt werden, die gemeinsam die Ausrichtung des Aufreißstreifens auf dem Zuschnitt beschreiben.

Die Ist-Position des Aufreißstreifens bzw. die Ist-Positionen von Teilabschnitten des Aufreißstreifens werden vorteilhafterweise ermittelt, indem in dem Signal des Zeilensensors jeweils die entsprechende Ist-Position einer der beiden Längskanten bestimmt wird.

Insofern die Ist-Positionen mehrerer Teilabschnitte des Aufreißstreifens ermittelt werden, können diese Ist-Positionen dann im Hinblick auf eine eventuelle Abweichung der Ist-Ausrichtung des Aufreißstreifens auf dem Zuschnitt gegenüber einer vorbestimmten Soll-Ausrichtung oder gegenüber einem vorbestimmten Soll-Ausrichtungsbereich ausgewertet werden. Die Auswertung erfolgt dabei bevorzugt im Hinblick auf Abweichungen in der Richtung, die quer zur Richtung der Längserstreckung des Aufreißstreifens verläuft bzw. in einer Richtung, die parallel zur Sensorzeile des Zeilensensors verläuft.

Die Analyse des jeweiligen Prüfsignals des Zeilensensors kann besonders erleichtert werden, indem die erste mathematische Ableitung des Prüfsignals gebildet wird. Das entsprechende Ergebnissignal bzw. der Betrag des Ergebnissignals wird dann im Hinblick auf den oder die von dem Aufreißstreifen hervorgerufenen, charakteristischen Signalinformationen ausgewertet. Regelmäßig sind dies charakteristische Signalspitzen.

Üblicherweise wird das oben beschriebene Prüfverfahren als Reflexionsverfahren ausgebildet. Mit anderen Worten wird das Folienmaterial, auf dem der Aufreißstreifen angeordnet ist oder angeordnet sein soll, insbesondere der jeweilige Zuschnitt, mindestens bereichsweise mit elektromagnetischer Strahlung (in der Regel sichtbares Licht, IR-Licht oder UV-Licht) einer benachbart zu einer ersten Seite des Folienmaterials angeordneten Quelle elektromagnetischer Strahlung durchstrahlt. Von einem benachbart zu der gegenüberliegenden, zweiten Seite des Folienmaterials angeordneten Reflektor wird dann die elektromagnetische Strahlung reflektiert. Die reflektierte Strahlung wird schließlich nach erneuter Durchstrahlung des Folienmaterials von einem benachbart zu der ersten Seite des Folienmaterials angeordneten Zeilensensor zur Erfassung der elektromagnetischen Strahlung detektiert.

Weiter ist es möglich, dass der Zeilensensor einen Prüfbereich des Folienmaterials, insbesondere des jeweiligen Zuschnitts, abtastet, der eine vorbestimmte Soll-Position oder einen vorbestimmten Soll-Positionsbereich eines insbesondere U-förmigen, die Aufreißbarkeit der Folie erleichternden Einschnitts in der Folie umfasst. Dabei wird - ähnlich wie bei der Kontrolle des Aufreißstreifens - das entsprechend von dem Zeilensensor bei einem Abtastvorgang erzeugte Prüfsignal ausgewertet im Hinblick auf ein oder mehrere charakteristische, von dem Einschnitt in der Folie hervorgerufene Signalinformationen. Dies können dann entsprechende, für den Einschnitt charakteristische Signalkanten oder Signalspitzen sein.

Was eine mögliche Vorrichtung zur Durchführung des Prüfverfahrens betrifft, so weist diese neben dem Zeilensensor eine Auswerteeinrichtung auf (regelmäßig eine für die hohen Taktzeiten in bei der Herstellung von Zigarettenpackungen ausgelegte, ausreichend schnelle Auswerteelektronik), mit der die von dem Zeilensensor erzeugten Prüfsignale in der beschriebenen Weise auswertbar sind. Der Fachmann weiß, wie eine entsprechende Auswerteeinrichtung bzw. Auswerteelektronik auszubilden ist, um die vorgenannten Auswertevorgänge ausführen zu können.

Weitere Merkmale der vorliegenden Erfindung ergeben sich aus den beigefügten Patentansprüchen, der nachfolgenden Beschreibung eines bevorzugten Ausführungsbeispiels sowie aus den beigefügten Zeichnungen. Darin zeigt:
- Fig.1: eine Übersicht über wesentliche Aggregate und Komponenten einer Vorrichtung zur Herstellung von Außenumhüllungen für Zigarettenpackungen.

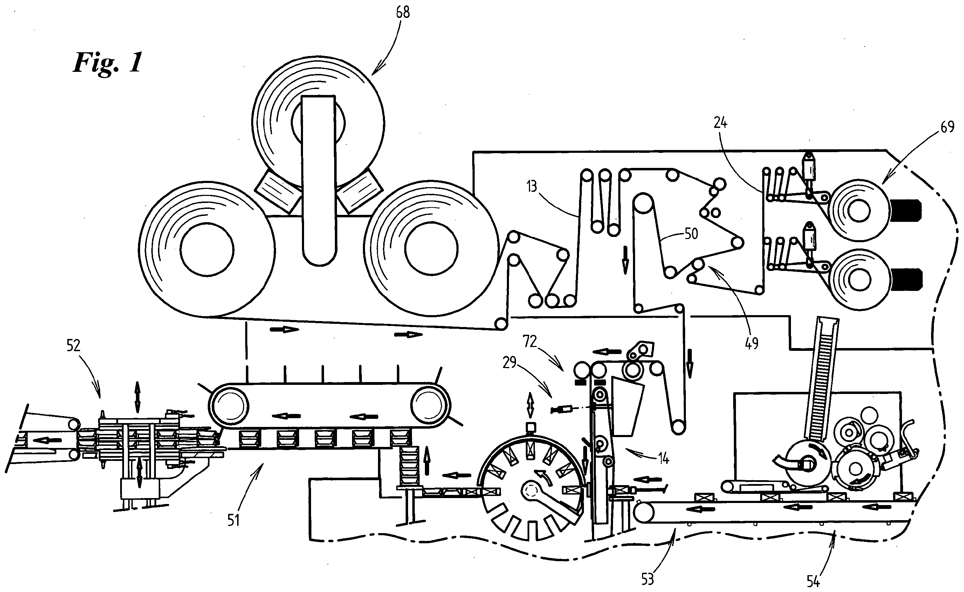

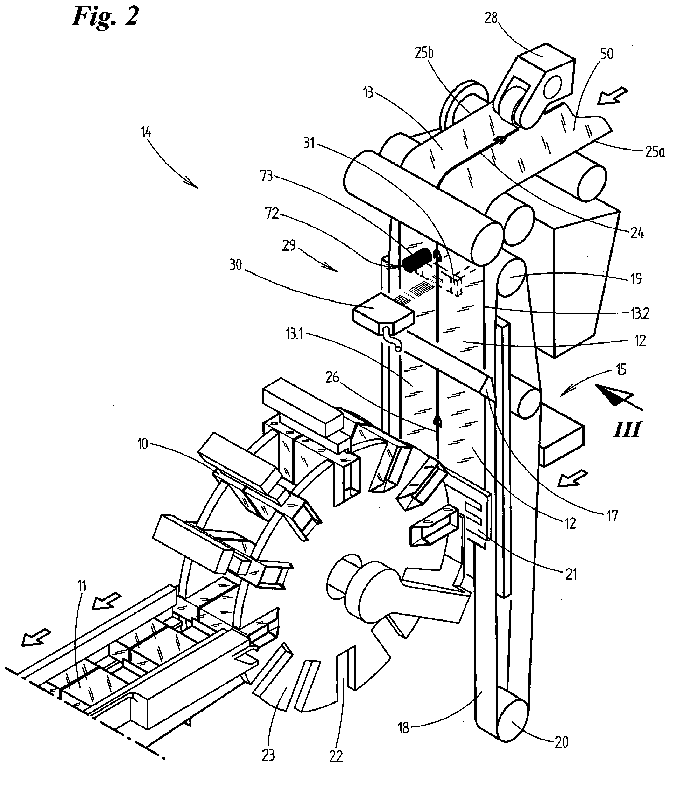

- Fig. 2: eine Schrägansicht eines Teilbereichs der Vorrichtung aus Fig. 1, nämlich eines Bereichs, in dem die (gedachten) Zuschnitte einer fortlaufenden Folienmaterialbahn mit darauf angeordnetem Aufreißstreifen in einzelne Zuschnitte getrennt werden, die jeweils um einzelne Zigarettenpackungen gefaltet werden, wobei vor der Vereinzelung der Zuschnitte die Verbundmaterialbahn bzw. die einzelnen Zuschnitte der Verbundmaterialbahn von einem ersten, elektrooptischen Prüforgan erfasst werden, nämlich vorliegend einem Zeilensensor, sowie von einem zweiten Prüforgan, nämlich einem Ultraschallsensor.
- Fig. 3: eine Seitenansicht des Teilbereichs der Vorrichtung gemäß Fig. 2 aus der Richtung III in Fig. 2,
- Fig. 4: eine schematische Darstellung der wesentlichen Zusammenhänge der bei einem erfindungsgemäßen Prüfverfahren mit dem ersten Prüforgan erfolgenden Abtastung der Folienmaterialbahn,
- Fig. 4a: die Einzelheit IVa aus Fig. 4 in vergrößerter Darstellung,
- Fig. 4b: die Einzelheit IVb aus Fig. 4 in vergrößerter Darstellung,
- Fig. 5: ein Diagramm, in dem ein während eines einzelnen Abtastvorgangs ermitteltes Prüfsignal des Zeilensensors dargestellt ist sowie ein daraus abgeleitetes Ergebnissignal, wobei auf der Abszissenachse die relative Entfernung des jeweiligen Pixels des Zeilensensors von einem Bezugspixel aufgetragen ist, auf der Ordinatenachse die jeweilige Intensität des Pixels,
- Fig. 6: ein Diagramm, in dem auf der Abszissenachse die Zeit aufgetragen ist und auf der Ordinatenachse der Maschinenwinkel der Verpackungsmaschine, des Weiteren ein ortsabhängiges Prüfsignal, an dem die Anwesenheit/das Fehlen und ggf. die Position des Aufreißstreifens erkennbar ist, des Weiteren ein True/False-Signal, das das Auftreten einer von dem U-förmigen Einschnitt stammenden Signalinformation in dem Prüfsignal maskiert, sowie ein Fehlersignal (True/False), dessen Status das Vorhandensein oder das Fehlen des Aufreißfadens repräsentiert,
- Fig. 7: eine Schnittdarstellung des Teilbereichs der Vorrichtung gemäß Fig. 2 entlang der Schnittlinie VII-VII aus Fig. 3,
- Fig. 8: eine Prinzipdarstellung wesentlicher Zusammenhänge eines erfindungsgemäßen Regelkreises zur Minimierung der Stärke einer Faltenbildung auf der Verbundmaterialbahn,
- Fig. 9: eine Draufsicht auf drei Verbundmaterialbahnabschnitte mit unterschiedlich starker Faltenbildung,
- Fig. 10: ein Diagramm von Rohsignalen, die jeweils von dem ersten Prüforgan im Rahmen einer Erfassung der Faltenbildung bei Abtastung der drei Verbundmaterialbahnabschnitte erzeugt werden,
- Fig. 11: ein Diagramm von aus den Rohsignalen abgeleiteten Signalen.
- Fig. 12: ein Diagramm d) zur Visualisierung der Zusammenhänge zwischen der Stärke der Faltenbildung einerseits und dem Verhältnis der Dehnungswerte e_{Faden} des Aufreißstreifens und e_{Folie} der Folienbahn sowie drei Schnittdarstellungen a)-c) möglicher Faltenbildungszustände einer Verbundmaterialbahn entlang der Schnittlinie XII-XII aus Fig. 7.

Die erfindungsgemäßen Verfahren und die erfindungsgemäße Vorrichtung zur Herstellung von Außenumhüllungen werden anhand der Zeichnungen weiter erläutert. Diese befassen sich mit der bevorzugt taktweisen Herstellung von Zigarettenpackungen 10, insbesondere des Typs Klappschachtel.

Gezeigt ist ein in der Vorrichtung zur Herstellung von Außenumhüllungen ablaufender Herstellungsprozess, in dem die Packungen 10 vorzugsweise allseitig mit einer Außenumhüllung 11 versehen werden. Die Außenumhüllung 11 besteht aus transparentem Material, bevorzugt Folie. Jeweils ein Zuschnitt 12 wird dabei um jeweils eine Packung 10 herum gefaltet.

Zu diesem Zweck wird eine fortlaufende Folienbahn 13 aus in diesem Moment noch untereinander verbundenen (gedachten) Zuschnitten 12 unter Aufbringen von Zugkräften durch eine Vorzugswalze 76 zusammen mit einem auf der Folienbahn 13 aufliegenden, fortlaufenden Aufreißstreifen 24 einem Zuschnittapparat 14 zugefördert. Dieser weist ein Trennaggregat 15 auf zum Durchtrennen der Folienbahn 13 mitsamt Aufreißstreifens 24 unter Bildung der einzelnen bzw. vereinzelten Zuschnitte 12. Im vorliegenden Fall handelt es sich bei dem Trennaggregat 15 um eine drehende Messerwalze 16 mit feststehendem Gegenmesser 17.

Die Folienbahn 13 und insbesondere die Zuschnitte 12 werden im Bereich des Zuschnittapparats 14 durch Endlosbänder transportiert, und zwar vorliegend durch Saugbänder 18, die über obere und untere Umlenkwalzen 19, 20 laufen. Der durch die Saugbänder 18 an Seitenrändern jeweils erfasste Zuschnitt 12 wird bereitgehalten zur Übernahme durch eine Packung 10. Diese Übernahme erfolgt unter Beteiligung eines Mundstücks 21.

Im vorliegenden Fall wird die Einheit aus Packung 10 und Zuschnitt 12 durch das Mundstück 21 hindurch in eine jeweils entsprechend ausgerichtete Tasche 22 eines Siegel- und Faltorgans geschoben, im vorliegenden Fall eines entsprechenden Siegel- und Faltrevolvers 23 mit einzelnen Taschen 22.

Die einzelnen Packungen 10 werden zu diesem Zweck von einem Apparat 54 zum Aufbringen von Banderolen kommend mit einem Förderer 53 mit Abständen voneinander in Richtung des Siegel- und Faltorgans 23 gefördert und in eine Einschubstellung übergeben. Diese Einschubstellung befindet sich gegenüber dem Siegel- und Faltorgan 23. Jeweils eine Tasche 22 desselben befindet sich in einer Einschubposition, nämlich der einzuführenden Packung 10 zugekehrt. Diese wird quer zum jeweils bereitgehaltenen Zuschnitt 12 durch einen Schieber in die Tasche 22 eingeschoben, wobei der Zuschnitt 12 unter U-förmiger Umhüllung der Packung 10 und unter Ablösen von den Saugbändern 18 mitgenommen wird.

Das Siegel- und Faltorgan 23 sorgt dafür, dass Faltlappen des Zuschnitts 12, nämlich Seitenfaltlappen, um die Packung 10 gefaltet werden und einzelne, übereinander liegende Faltlappen miteinander versiegelt werden. Anschließend werden die Packungen 10 jeweils aus einer in einer Ausschubstellung befindlichen Tasche 22 ausgeschoben und weitergefördert. Dabei erfolgt während der weiteren Förderbewegung der einzelnen Packungen 10 bzw. während des Abschubs derselben aus dem Bereich des Siegel- und Faltorgans 23 die Faltung der im Kopf- bzw. Bodenbereich befindlichen Faltlappen der Außenumhüllung 11. Die Packungen 10 werden zur weiteren Handhabung im Anschluss einer bekannten Heft- und Siegelstation 51 und anschließend einer Schrumpfstation 52 zugefördert, deren Funktionsweise nicht näher erörtert wird, da sie für die Erfindung nicht relevant ist.

Auf der Folienbahn 13 befindet sich, wie bereits erwähnt, ein fortlaufender Aufreißstreifen 24 bzw. eine Aufreißstreifenbahn. Die Folienbahn 13 und der Aufreißstreifen 24 bilden dementsprechend eine Verbundmaterialbahn 50. Der Aufreißstreifen 24 wird dabei stromauf der in Fig. 2 gezeigten Aggregate in den Förderweg der Folienbahn 13 eingefördert und an einer Verbindungsstation 49 mit der Folienbahn 13 verbunden. Vorliegend wird er auf die Vorderseite 13.1 der Folienbahn 13 aufgelegt. Die Einzelheiten der Verbindungsstation 49 werden nicht näher erläutert, sind im Stand der Technik aber bekannt. In einfachster Ausbildung könnte diese beispielsweise eine Rolle umfassen, entlang der die Folienbahn 13 geführt wird, wobei der Aufreißstreifen 24 im Bereich der Rolle in den Förderweg der Folienbahn 13 eingefördert und an der Rolle auf die Folienbahn 13 aufgelegt bzw. aufgebracht wird.

Der Aufreißstreifen 24 verfügt im vorliegenden Fall über eine selbstklebende Seite, die entsprechend mit der Vorderseite 13.1 der Folienbahn 13 in Kontakt gebracht wird und für die Haftung zwischen Aufreißstreifen 24 und Folienbahn 13 sorgt.

Im vorliegenden Ausführungsbeispiel verläuft der Aufreißstreifen 24 parallel zu den Längskanten 25a, 25b der Folienbahn 13, und zwar in etwa mittig zwischen diesen beiden Längskanten 25a, 25b. Bei der Trennung der Folienbahn 13 in die einzelnen Zuschnitte 12 erfolgt dementsprechend zugleich die Trennung des aufliegenden fortlaufenden Aufreißstreifens 24 in entsprechende, einzelne Aufreißstreifenzuschnitte 26.

Vor der Trennung der Folienbahn 13 in die einzelnen Zuschnitte 12 wird in jeden (gedachten) Zuschnitt 12 der Folienbahn 13 ein Einschnitt 27 eingebracht. Vorliegend ist dieser Einschnitt 27 U-förmig ausgebildet. Er kann aber natürlich auch eine andere Kontur haben. Der Einschnitt 27 wird durch eine entsprechend taktweise arbeitende Messerschneideinheit 28 eingebracht.

Im Bereich dieses Einschnitts 27 bildet der Aufreißstreifen 24 später eine Art Lasche aus, an der er zur späteren händischen Auftrennung der Außenumhüllung 11 gegriffen werden kann.

Im Herstellungsprozess findet automatisch eine Prüfung der (gedachten) Zuschnitte 12 der fortlaufenden Folienbahn 13 bzw. des aufliegenden Aufreißstreifens 24 statt.

Zu diesem Zweck ist stromauf des Trennaggregats 15 eine Prüfstation 29 angeordnet. Die Prüfstation 29 umfasst als elektrooptisches Prüforgan ein Sensoraggregat 30 sowie einen Reflektor 31, und zwar vorliegend einen sogenannten Tripelreflektor. Das Sensoraggregat 30 ist mit Abstand zu der Vorderseite 13.1 der Folienbahn 13 diesseits der Folienbahn 13 angeordnet, der Reflektor 31 gegenüberliegend benachbart und mit Abstand zu der Rückseite 13.2 der Folienbahn 13, das heißt, jenseits der Folienbahn 13.

Das Sensoraggregat 30 verfügt zum einen als Prüforgan über einen Zeilensensor mit einer Vielzahl, beispielsweise mindestens 30, mindestens 100 oder mehr nebeneinander, in einer Zeile angeordneten, optoelektronischen Sensorelementen, die die einzelnen Pixel des Zeilensensors bilden. Derartige Zeilensensoren sind im Stand der Technik bekannt.

Zum anderen verfügt das Sensoraggregat 30 über eine Quelle elektromagnetischer Strahlung, beispielsweise einen Lichtgeber, der sichtbares oder nicht-sichtbares Licht (IR, UV) ausstrahlt.

Das Sensoraggregat 30 und der Reflektor 31 sind konfokal ausgerichtet. Dabei sind sie so positioniert, dass das Licht des Lichtgebers die Folienbahn 13 von der Vorderseite 13.1 aus durchstrahlen kann, an der Rückseite 13.2 austritt, auf den Reflektor 31 trifft, von diesem reflektiert wird, zumindest größtenteils erneut die Folienbahn 13 (in umgekehrter Richtung) durchstrahlt und anschließend auf den Zeilensensor des Sensoraggregats 30 trifft bzw. von diesem empfangen wird.

Das Sensoraggregat 30 ist vorliegend verschwenkbar gelagert. Hierdurch ist der Winkel der Blickrichtung des Zeilensensors einerseits und des von dem Lichtgeber ausgesendeten Lichtstrahls andererseits gegenüber der Folienbahn 13 bzw. der Folienbahnnormalen einstellbar (vorliegend zwischen 5° und 10°). Mit anderen Worten ist der Winkel einstellbar, unter dem das Licht des Lichtgebers auf die Folienbahn 13 trifft und der Winkel der Blickrichtung des Zeilensensors gegenüber der Folienbahn 13. Hierdurch wird erreicht, dass beispielsweise bei Aufreißstreifen aus stark reflektierendem Material das von diesen reflektierte Licht nicht oder wenigstens zum größten Teil nicht als störendes Streulicht auf den Zeilensensor fällt.

Das Sensoraggregat 30 bzw. die Prüfstation 29 verfügt über eine geeignete Steuerungs- und Auswerteelektronik, die unter anderem eine schnelle Steuerung des Zeilensensors sowie eine schnelle Auswertung der von dem Zeilensensor jeweils stammenden Prüfsignale erlaubt.

Die Prüfstation 29 ist unter anderem dafür vorgesehen, einen vorgegebenen Prüfbereich 32 der Folienbahn 13 daraufhin zu prüfen, ob der Aufreißstreifen 24 ordnungsgemäß vorhanden ist, das heißt, ordnungsgemäß auf die Folienbahn 13 aufgebracht worden ist. Weiter kann mit der Prüfstation 29 überprüft werden, ob die Längsausrichtung des Aufreißstreifens 24 auf der Folienbahn 13 vorgegebenen Kriterien entspricht, also beispielsweise bezogen auf die auf den jeweiligen Zuschnitts 12 (zu) schräg zu der Längsmittelachse des jeweiligen (gedachten) Zuschnitt 12 verläuft. Weiter können mit der Prüfstation 29 die im vorliegenden Fall U-förmigen Einschnitte 27 daraufhin kontrolliert werden, ob sie (ganz oder teilweise) vorhanden sind und/oder ordnungsgemäß positioniert sind.

Im vorliegenden Fall wird der Prüfbereich 32 im Wesentlichen durch die Breite der Zeile des Zeilensensors definiert. Für jeden (gedachten) Zuschnitt 12 der Folienbahn 13 nimmt der Zeilensensor des Sensoraggregats 30 mindestens einen, im vorliegenden Fall sogar 90 Prüfsignale auf. Innerhalb eines Maschinentaktes wird die Folienbahn 13 dabei jeweils um einen bestimmten Abschnitt weitergefördert, der der Länge eines Zuschnitts 12 entspricht. Während dieser Förderbewegung tastet der Zeilensensor dann den sich bewegenden Folienbahnabschnitt bzw. (gedachten) Zuschnitt 12 nacheinander in kurzen Zeitabständen ab. Bei jedem Abtastvorgang erzeugt der Zeilensensor ein entsprechendes Prüfsignal.

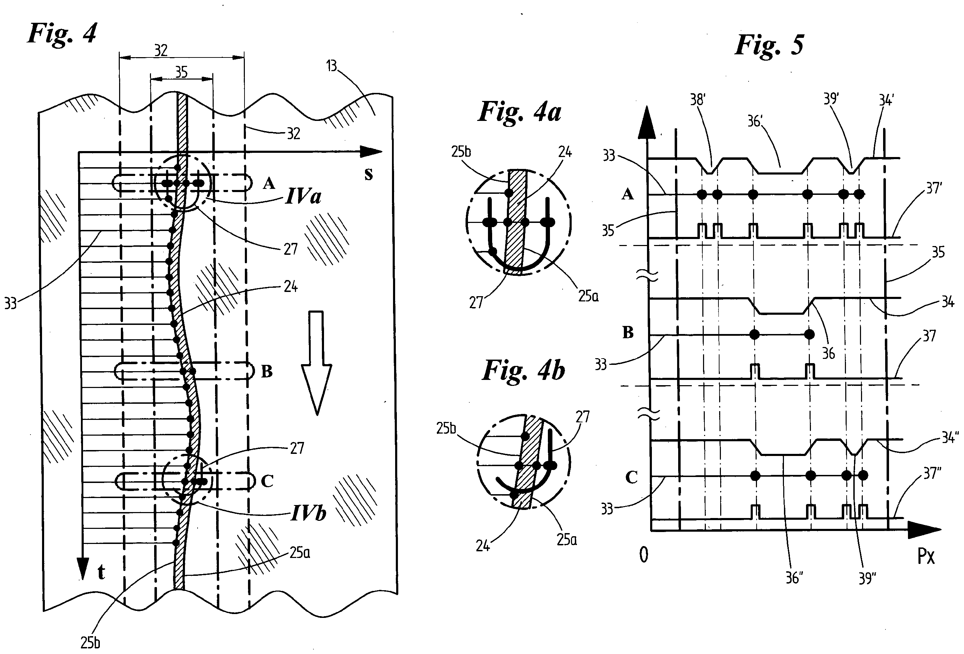

Die Punktsymbole an den Linien 33 in Fig.4 repräsentieren die Positionen derjenigen Signalinformationen innerhalb der jeweiligen Prüfsignale, die von dem in Fig. 4 gezeigten Aufreißstreifen 24 bzw. den dort gezeigten Einschnitten 27 hervorgerufen werden.

Bei jedem Abtastvorgang erzeugt der Zeilensensor ein Prüfsignal 34 als Rohsignal. In Fig. 5 ist beispielhaft für den in Fig. 4 gekennzeichneten Bereich B ein solches mit dem Zeilensensor aufgenommenes Prüfsignal 34 dargestellt. Auf der Ordinatenachse ist die Intensität des Prüfsignals dargestellt, beispielsweise die Helligkeitsweite der Pixel auf der Abszissenachse, die Entfernung des jeweiligen optoelektronischen Sensorelements bzw. Pixels von einem definierten Bezugspunkt des Zeilensensors, beispielsweise von dem linken oder rechten Rand der Sensorzeile des Zeilensensors.

Der Zeilensensor bzw. das Sensoraggregat 30 sowie der Reflektor 31 sind dabei relativ zu der Folienbahn 13 so ausgerichtet, dass der Prüfbereich 32 desselben, wie in Fig. 4 zu erkennen ist, einen vordefinierten Soll-Positionsbereich oder Gutbereich 35 umfasst, in dem der Aufreißstreifen 24 angeordnet sein muss, um als "vorhanden" bewertet zu werden.

Das von dem Zeilensensor im Bereich B empfangene bzw. erzeugte Roh- bzw. Prüfsignal 34 wird durch eine Auswerteeinrichtung, im vorliegenden Fall die Auswerteelektronik, ausgewertet im Hinblick auf ein oder mehrere charakteristische, von dem Aufreißstreifen 24 hervorgerufene Signalinformationen.

Im Beispiel des abgetasteten Bereichs B weist das Signal 34 zentral im Soll-Positionsbereich 32 eine charakteristische Signalabschwächung 36 auf, die von dem Aufreißfaden 24 stammt. Von kleineren Pixelentfernungen bzw. vom Bezugspunkt aus gesehen lässt dabei das zunächst konstante Rohsignal 34 bei steigenden Entfernungswerten unter Ausbildung einer ersten Übergangskante zunächst in seiner Intensität sprunghaft nach und springt bei weiter steigenden Entfernungswerten unter Ausbildung einer weiteren Übergangskante wieder auf den Ursprungswert Diese charakteristische Signalinformation 36 ergibt sich aufgrund der besonderen Dämpfung des Lichtsignals des Lichtsignalgebers im Bereich des Aufreißfadens 24.

Die Signalkanten des charakteristischen Signals 36 werden konkret durch die Längskanten 25a bzw. 25b des Aufreißstreifens 24 hervorgerufen. Zur Erfassung der Position des Aufreißstreifens 24 genügt es daher, die Position einer der beiden Längskanten 25a, 25b zu erfassen. Im vorliegenden Fall ist dies die Längskante 25b, vgl. Symbol 33 in Fig. 4.

Durch die Erfassung der Positionen beider Längskanten 25a, 25b könnte allerdings zusätzlich bei Bedarf die Ist-Breite des Aufreißstreifens 24 bestimmt und mit einer vorgegebenen Soll-Breite verglichen werden bzw. einem vorgegebenen Soll-Breitenbereich.

Was die Signalauswertung betrifft, so wird vorliegend zu deren Vereinfachung durch die Auswerteelektronik zunächst die erste mathematische Ableitung des Rohsignals 34 gebildet. Dieser Auswertungsschritt ist aber natürlich nicht zwingend erforderlich.

Der Betrag der mathematischen Ableitung entspricht in Fig. 5 dem Signal 37. Gut zu erkennen ist, dass den beiden Übergangskanten im Prüfsignal 34 in dem Betrag der ersten mathematischen Ableitung 37 ausgeprägte Signalspitzen entsprechen. Die Auswerteelektronik kann diese Signalspitzen in einfacher Weise erkennen.

In Fig. 5 sind dem Prüfrohsignal 34 (aufgenommen in Bereich B der Folienbahn 13) weitere Prüfrohsignale 34', 34" gegenübergestellt. Zudem sind die Beträge der jeweiligen ersten mathematischen Ableitungen 37', 37" gezeigt.

Das Signal 34' wurde in dem Bereich A der Folienbahn 13 (Fig. 4) aufgenommen. Das Signal 34' repräsentiert den Fall, dass sowohl der Aufreißstreifen 24 als auch der Einschnitt 27 in dem Prüfbereich vorhanden ist. Dabei sind sowohl der Aufreißstreifen 24 als auch der Einschnitt 27 ordnungsgemäß ausgebildet und positioniert.

Das Signal 34' weist entsprechend drei charakteristische Signalinformationen auf, nämlich die Signalinformationen 36', 38' und 39'. Die Signalinformation 36' repräsentiert dabei (analog zu der Signalinformation 36 des in dem Bereich A aufgenommen Signals 34) den Aufreißstreifen 24 bzw. ist durch diesen hervorgerufen.

Die Signalinformationen 38', 39' repräsentieren jeweils die linke bzw. die rechte Seite des U-förmigen Einschnitts 27. Mit anderen Worten verursacht der Einschnitt 27 die beiden jeweils zur linken bzw. rechten Seite der Signalinformation 36' angeordneten Signalinformation 38', 39'.

In Betrag der ersten mathematischen Ableitung 37' des Signals 34' ergeben sich somit insgesamt sechs Signalspitzen (zwei Signalspitzen für die Längskanten 25a bzw. 25b. jeweils zwei Signalspitzen für die linke bzw. die rechte Seite des Einschnitts 27).

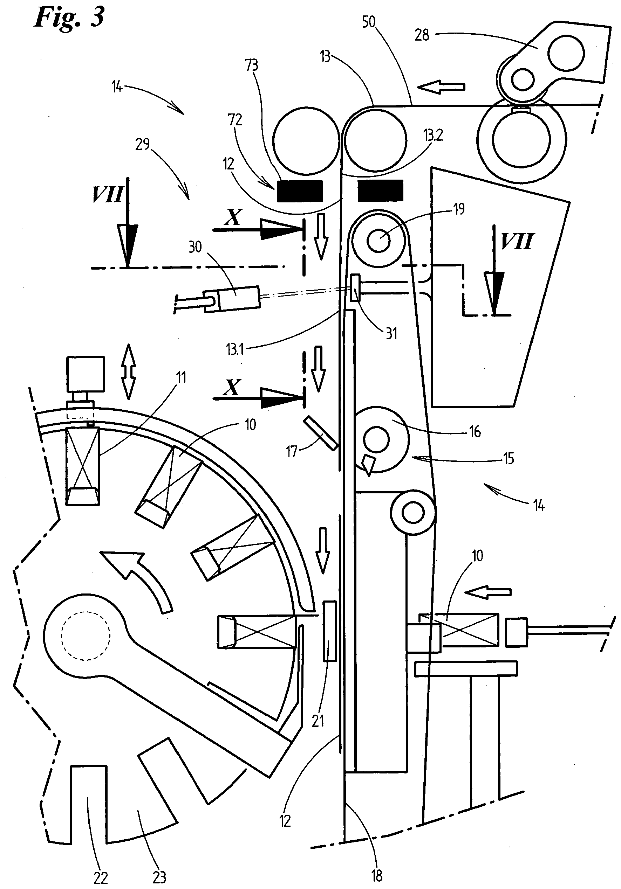

Das Signal 34" wurde in dem Bereich C der Folienbahn 13 (Fig. 3) aufgenommen. Das Signal 34" repräsentiert den Fall, dass zwar der Aufreißstreifen 24 vorhanden ist, der Einschnitt 27 dagegen fehlerhaft ist. Es fehlt die linke Seite des Einschnitts 27.

Entsprechend fehlt im Prüfsignal 34" im Vergleich zu dem Signal 34' die der Signalinformation 38' entsprechende Signalinformation, die der linken Seite des Einschnitts 27 entspricht. In der Ableitung 37" sind daher nur vier Signalspitzen vorhanden (zwei Signalspitzen für die Längskanten 25a bzw. 25b, zwei Signalspitzen für die rechte Seite des Einschnitts 27).

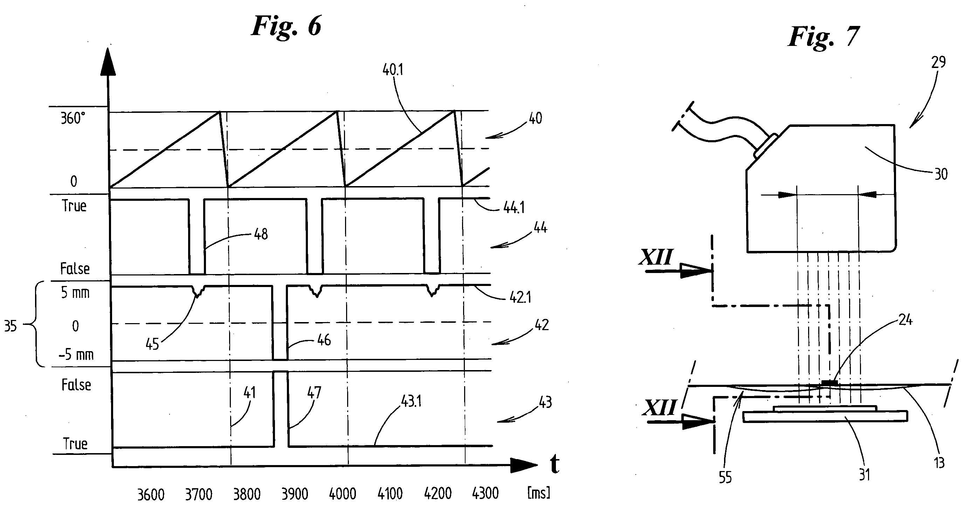

Fig. 6 schließlich entspricht einer Darstellung, in der auf der Abszissenachse die Zeit aufgetragen ist.

Auf der Ordinatenachse ist in einem Bereich 40 der Maschinenwinkel der Verpackungsmaschine gezeigt. Die gestrichelten Linien 41 definieren jeweils das Ende eines Maschinentaktes. Der Länge eines Maschinentaktes ist jeweils die Länge eines (gedachten) Zuschnitts 12 auf der Folienbahn 13 zugeordnet. Mit anderen Worten tastet der Zeilensensor während des Zeitabschnitts, der einem Maschinentakt entspricht, auf der Folienbahn 13 jeweils exakt einen Bereich ab, der nach dem späteren Trennvorgang einem einzelnen Zuschnitt 12 entspricht.

Der Bereich 42 auf der Ordinatenachse entspricht der Breite des Soll-Positionsbereichs 35 aus Fig. 3 (angegeben in Millimetern). Das Prüfsignal 42.1 symbolisiert dabei den zeitabhängigen Verlauf der Position des Aufreißstreifens 24 auf der Folienbahn 13, und zwar innerhalb des Soll-Positionsbereichs 35. Wie anhand des Signalanteils 46 erkennbar ist, ist in dem Soll-Positionsbereich 35 zu einem Zeitpunkt von ca. 3.880 ms kein ordnungsgemäßes Aufreißstreifensignal detektierbar.

Entsprechend wechselt zu diesem Zeitpunkt ein Statussignal 43.1, das in dem Bereich 43 der Ordinatenachse gezeigt ist, seinen Status von "True" (fehlerfrei) auf "False" (Fehler), vgl. Signalanteil 47. Das Fehlersignal "False" führt in seiner Folge automatisch zum Ausschleusen derjenigen Packung 10 aus dem Herstellungsprozess, die später in den als fehlerhaft erkannten Zuschnitt 12 eingewickelt wird, der während des zugeordneten Zeitabschnitts bzw. des zugeordneten Maschinentaktes von dem Zeilensensor abgetastet wurde.

Im Bereich 44 der Ordinatenachse schließlich ist ein Ausblendungssignal 44.1 gezeigt, das im Rahmen der Auswertung durch die Auswerteelektronik dafür sorgt, dass in dem Soll-Positionsbereich 35 taktweise zu vorbestimmten Zeitpunkten erscheinende Signalanteile 45, die von dem Einschnitt 27 stammen, und die die Auswertung erschweren könnten, ausgeblendet bzw. ignoriert werden, vgl. Signalanteile 48.

Besonders wichtig ist nun die Vermeidung bzw. Reduzierung der Bildung von Falten auf der Verbundmaterialbahn 50 innerhalb des Produktionsprozesses mittels einer Regelung der Faltenbildungsstärke.

Die Verbundmaterialbahn 50 wirft ggf. dann Falten, wenn die Messerschneideinheit 28 die Einschnitte 27 in die Verbundmaterialbahn 50 eingebracht hat. Denn hierdurch fallen jedenfalls im Bereich des von dem Einschnitt betroffenen Aufreißstreifens 24 die Gegenkräfte der auf die Verbundmaterialbahn 50 wirkenden Zugkräfte weg, sodass die Bahnspannung, der die Verbundmaterialbahn 50 während des Transports zu dem Zuschnittapparat 14 unterliegt, verringert wird. Faltenbildung tritt nach dem Einbringen der Einschnitte 27 dann auf, falls der Aufreißstreifen 24 einerseits und die Folie bzw. die Folienbahn 13 andererseits unterschiedliche Dehnungswerte aufweisen, wenn diese an der Verbindungsstation 49 zusammengebracht werden. Denn sobald in diesem Fall später die Zugkraft bzw. die Spannung auf die Verbundmaterialbahn 50 - beispielsweise wie oben beschrieben aufgrund der vorgenannten Einschnitte 27 - wegfällt oder nachlässt, zieht sich der Aufreißstreifen 24 im Vergleich zu der Folienbahn 13 entweder stärker oder schwächer zusammen bzw. schrumpft stärker oder schwächer als die Folienbahn 13. Je größer dabei die Unterschiede der Dehnung des Aufreißstreifens 24 einerseits und der Folienbahn 13 andererseits sind, desto stärker wird die Faltenbildung ausfallen.

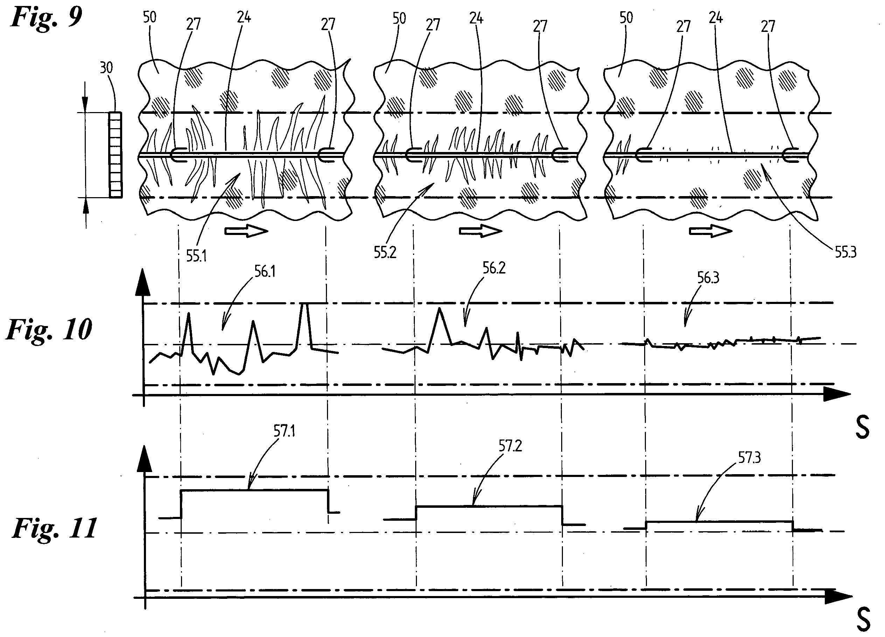

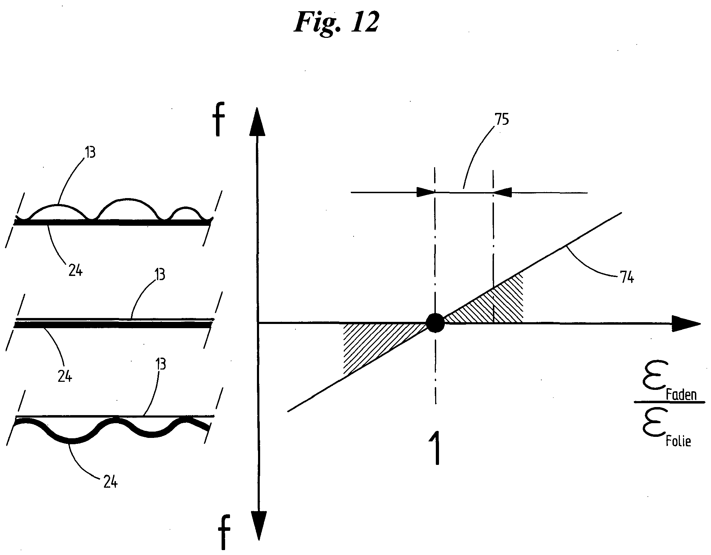

In den Fig. 7 und 9 sowie in der Zeichnung a) der Fig. 12 ist beispielhaft eine Situation dargestellt, in der der Aufreißstreifen 13 bei dem Auflegen auf die Folienbahn 13 bzw. beim Verbinden mit der Folienbahn 13 stärker gedehnt war als die Folienbahn 13 und infolgedessen nach Wegfall der Zugkraft eine Faltenbildung 55 in der Folienbahn 13 auftritt.

Allerdings ist auch der umgekehrte Fall denkbar, in dem also die Folienbahn 13 stärker gedehnt war und infolgedessen bei Wegfall der Zugkraft der Aufreißstreifen 24 Falten wirft, vgl. Zeichnung c) der Fig. 12.

Falls die Dehnungswerte dagegen in dem vorgenannten Moment übereinstimmten, schrumpfen die Folienbahn 13 und der Aufreißstreifen 24 bei Wegfall der Zugkraft gleich stark, sodass keine Faltenbildung 55 auftritt, vgl. Zeichnung b) in Fig. 12.

Eine Faltenbildung 55 entsprechend Zeichnung a) in Fig.12, bei der die Faltenbildung in der Folienbahn 13 auftritt, kann beispielsweise mit der bereits oben beschriebenen, zwischen der Messerschneideinheit 28 und dem Trennaggregat 15 angeordneten Prüfstation 29 bzw. dem Sensoraggregat 30 erfasst bzw. detektiert werden, dessen Erfassungsbereich sich - wie beschrieben - quer zur Längserstreckung der Verbundmaterialbahn 50 erstreckt. Pro gedachtem Zuschnitt bzw. pro Zuschnittlänge erfolgt dabei eine Vielzahl von Einzelmessungen des Zeilensensors des Sensoraggregats 30 bzw. der (gedachte) Zuschnitt wird in Längsrichtung mehrfach abgetastet. Natürlich sind auch andere Sensoren als ein Zeilensensor zur Detektion von Falten denkbar.

Eine Faltenbildung 55 entsprechend Zeichnung c) in Fig.12, bei der der Aufreißstreifen 24 gewellt ist bzw. die Faltenbildung 55 in dem Aufreißstreifen 24 entsteht, kann durch den Zeilensensor nicht gemessen werden. Zu diesem Zweck ist zwischen der Messerschneideinheit 28 und dem Trennaggregat 15 eine zweite Prüfstation 72 mit einem Sensoraggregat 73 angeordnet, das im vorliegenden Fall einen Ultraschallsensor umfasst. Es sind aber auch andere Sensoren denkbar, mit denen eine Faltenbildung 55 des Aufreißstreifens detektiert werden kann.

In dem Diagramm d) in Fig. 12 sind die oben genannten Zusammenhänge nochmals visualisiert. Auf der Abszisse ist das Verhältnis der Dehnungswerte e_{Faden} und e_{Folie} dargestellt. Auf der Ordinate ist die Stärke der Faltenbildung f aufgetragen. Die Gerade 74 visualisiert den Zusammenhang zwischen dem Verhältnis der vorgenannten Dehnungswerte und der Faltenbildung f. Bei Verhältniszahlen größer 1 ergibt sich eine Faltenbildung 55 der Folie, bei Verhältniszahlen kleiner 1 eine Faltenbildung 55 des Aufreißstreifens 24. Bei einer Verhältniszahl 1 dagegen tritt keine Faltenbildung 55 auf bzw. eine Faltenbildung mit dem Wert 0. Die Bezugsziffer 75 kennzeichnet einen Arbeitsbereich, in dem das Sensoraggregat 30 optimal arbeiten kann. Bei Verhältniszahlen kleiner 1 wird das Sensoraggregat 73 eingesetzt, mit dem die Faltenbildung 55 des Aufreißstreifens 24 detektiert werden kann.

In der Fig. 9 sind beispielhaft drei verschiedene Faltenbildungen 55.1, 55,2 bzw. 55.3 der Folienbahn 13 unterschiedlicher Stärke gezeigt. Wie zu erkennen ist, ist die Faltenbildung 55.1 am stärksten ausgeprägt, insbesondere stärker als die Faltenbildungen 55.2, 55.3. Die einzelnen Falten der Faltenbildung 55.1 ragen weit nach außen. Die Faltenbildung 55.2 ist etwas schwächer ausgebildet. Die einzelnen Falten derselben ragen weniger weit nach außen. Die Faltenbildung 55.3 ist im Vergleich am schwächsten ausgeprägt.

In der Fig. 10 sind jeweils Rohsignale 56.1, 56.2 und 56.3 gezeigt, die das Sensoraggregat 30 der Prüfstation 29 bei Erfassung der Faltenbildungen 55.1, 55.2 bzw. 55.3 jeweils erzeugt hat. Die vertikalen Strichpunktlinien markieren dabei eine Zuschnittlänge. Das Sensoraggregat 30 tastet zu diesem Zweck die Verbundmaterialbahn 50 in Längsrichtung bevorzugt mehrfach ab, beispielsweise kontinuierlich oder in bestimmten Zeitabständen. Dies im vorliegenden Ausführungsbeispiel während die Verbundmaterialbahn 50 kontinuierlich an dem Sensoraggregat 30 vorbeibewegt wird.

Bei Vergleich der Faltenbildung 55.1 mit dem dieser zugeordneten Rohsignal 56.1, der Faltenbildung 55.2 mit dem zugeordneten Rohsignal 56.2 bzw. der Faltenbildung 55.3 mit dem zugeordneten Rohsignal 56.3 fällt auf, dass sich die Stärke der jeweiligen Faltenbildung 55.1-55.3 in den Rohsignalen 56.1-56.3 wiederfindet. Das Rohsignal ist also ein Maß für die Stärke der Faltenbildung. Mit anderen Worten ist das Signal des Zeilensensors des Sensoraggregats 30 abhängig von der jeweiligen Faltenbildung 55.1. 55.2, 55.3.

Diese Abhängigkeit ist noch deutlicher aus Fig. 11 abzuleiten. Die dortigen Signale 57.1, 57.2 bzw. 57.3 sind aus den jeweiligen Rohsignalen 56.1, 56.2 bzw. 56.3 abgeleitet worden. Vorliegend ist jeweils über eine Zuschnittlänge eine Mittelwertbildung der Rohsignal(werte) erfolgt. Je stärker die Faltenbildung 55.1-55.3 auf einem Zuschnitt ist, desto höher ist der jeweilige Mittelwert 57.1, 57.2 bzw. 57.3 des jeweiligen Rohsignals 56.1, 56.2 bzw. 56.3.

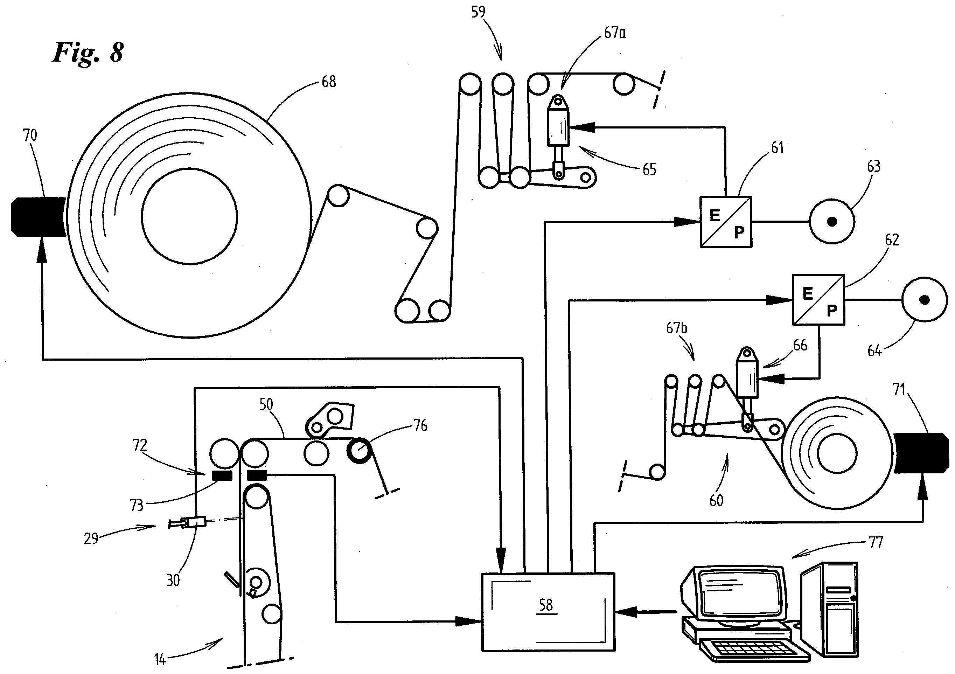

Erfindungsgemäß werden nun nach der Erfassung von im Prozess auftretenden Faltenbildungen 55 Parameter des Prozesses so gesteuert, dass der Faltenbildung 55 entgegengewirkt wird. Zu diesem Zweck werden die die entsprechende Faltenbildung 55 repräsentierenden Signale des entsprechenden Sensoraggregats (beispielsweise die Rohsignale 56.1-56.3 des Sensoraggregats 30 oder ggf. von der Auswerteelektronik des Sensoraggregats 30 entsprechend aus den Rohsignalen 56.1-56.3 abgeleitete Werte) einem geeigneten Regler 58 übermittelt (vgl. Fig. 8).

Abhängig hiervon stellt der Regler 58 dann die Bahnspannung(en) des Aufreißstreifens 24 oder beider Materialbahnen, also des Aufreißstreifens 24 und der Folienbahn 13, unter der die Materialbahnen zu der Verbindungsstation 49 transportiert wird/werden, so ein, dass die Faltenbildung 55 verringert wird oder minimal wird. Denn die Bahnspannungen, die der Aufreißfaden 24 und die Folienbahn 13 aufweisen, wenn sie in der Verbindungsstation 49 miteinander verbunden werden, haben, wie weiter oben bereits ausgeführt, unmittelbar Einfluss auf die Faltenbildung 55.

Beispielsweise kann der Regler 58 bei Detektion einer Faltenbildung 55 der Folienbahn 13 bestimmter Stärke die Bahnspannung des Aufreißfadens 13 so lange verringern, bis keine Faltenbildung 55 mehr gemessen wird oder ein Maß der Stärke der Faltenbildung erreicht ist, die toleriert werden kann. Die Stärke der Faltenbildung 55 ist demnach letztlich die Regelgröße eines geschlossenen Regelkreises, dessen (mindestens eine) Stellgröße die Bahnspannung des Aufreißstreifens 24 und ggf. zusätzlich der Bahnspannung der Folienbahn 13 ist.

Es ist dabei nicht zwingend immer wünschenswert, die Stärke der Bahnspannung auf Null zu reduzieren. So kann ein gewisser Grad von Faltenbildung in dem oben beschriebenen Prozessstadium noch erwünscht sein. Denn beispielsweise werden Folien zum Teil in späteren separaten Wärmenachbehandlungsprozessen (vgl. Schrumpfstation 52) noch definiert geschrumpft. Bei diesem Schrumpfungsprozess liegt der Aufreißstreifen allerdings regelmäßig wärmeisoliert auf der von dem Heizorgan abgewandten Seite, sodass durch eine stärkere Wärmeübertragung auf die Folie diese stärker schrumpft als der Aufreißstreifen. Mithin könnte der zuvor tolerierte Grad an Faltenbildung der Folie die ansonsten durch den Schrumpfungsprozess auftretende Faltenbildung kompensieren, sodass im Anschluss an den Wärmenachbehandlungsprozess sämtliche Falten verschwunden wären.

Zur konkreten Umsetzung der Einstellung der Bahnspannungen spricht der Regler 58 im vorliegenden Ausführungsbeispiel im Stand der Technik bereits bekannte Bahnspannungseinsteller 59, 60 an. Die Bahnspannung wird unmittelbar durch die auf die jeweilige Bahn 13 bzw. 24 aufgebrachte Zugkraft bestimmt.

Wie in Fig. 9 gezeigt ist, kann der Regler 58 beispielsweise jeweils über elektropneumatische Wandler 61, 62 Druckquellen 63, 64 steuern, die über pneumatische Aktoren 65 bzw. 66 und geeignete Tänzersysteme 67a. 67b Zugkräfte in die jeweilige Materialbahn 24 bzw. 13 einprägen können und somit die Bahnspannung verändern können.

Die effektiv wirkenden Zugkräfte werden natürlich auch durch die von der/den entsprechenden Vorzugswalze(n) aufgebrachten Zugkräfte mitbestimmt (beispielsweise Vorzugswalze 76).

Einfluss auf die Bahnspannung bzw. die Zugkraft können auch die Massenträgheiten der jeweiligen Bobinen 68, 69 haben, von denen die Folienbahn 13 bzw. der Aufreißstreifen 24 abgezogen werden. Diese wirken sich bei Beschleunigungs- bzw. Verzögerungsvorgängen aus. Der Regler 58 kann daher auch entsprechende Servomotoren 70, 71 steuern, die die Beschleunigungen bzw. die Verzögerungen der Bobinen 68, 69 vorgeben. Die Werte der Massenträgheiten der Bobinen 68, 69 können durch bekannte Sensorik bestimmt werden.

Weiter kann erfindungsgemäß noch vorgesehen sein, den Regelungsalgorithmus, den der Regler 58 bei der Regelung der Stärke der Faltenbildung verwendet, an das konkret eingesetzte Folienmaterial 13 bzw. das konkret eingesetzte Aufreißstreifenmaterial 24 anzupassen. Entsprechend könnte der Regler 58 einen aktuell zu verwendenden Regelungsalgorithmus oder mindestens wichtige Parameter für die Regelung, abhängig von den verarbeiteten Materialien, d.h. allgemein gesprochen abhängig von mindestens einem spezifischen Materialkennwert des Aufreißstreifens 24 und/oder der Folienbahn 13, aus einem zugeordneten elektronischen Speicher bzw. einer zugeordnen Datenbank auswählen. Es kann sich hierbei beispielsweise um eine einer Computereinrichtung 77 zugeordnete Datenbank handeln. In diesem Speicher wäre entsprechend zu unterschiedlichen Materialien oder Materialkombinationen jeweils mindestens ein Regelungsalgorithmus oder jeweils mindestens ein Regelungsparameter auswählbar abgelegt.

Der Begriff Materialkennwert wird im Rahmen dieser Anmeldung für sämtliche auf das jeweilige Material bzw. die jeweilige Folienbahn/den jeweiligen Aufreißstreifen bezogenen, dessen physikalischen Eigenschaften beschreibende Größen verwendet, wie etwa Breite, Dicke, E-Modul, aber auch für jeweils das Material identifizierende, diesem zugeordnete Kennungen.

Die oben beschriebene Regelung der Faltenbildungsstärke erfolgt bevorzugt im laufenden Prozess zur Herstellung der Außenumhüllungen 11 und greift, wie beschrieben, dann ein, wenn eine (Ist-)Faltenbildung detektiert wird, die über das tolerierbare bzw. gewünschte Maß hinausgeht.

Im Normalbetrieb bzw. fehlerfreien Betrieb können bei der vorliegenden Ausführungsform der Erfindung zunächst Sollwerte bzw. Standardwerte für die auf die Bahnen 13, 24 aufzubringenden Zugkräfte verwendet werden bzw. die entsprechenden Werte eingestellt werden. Diese werden, wie nachfolgend beispielhaft näher beschrieben ist, so ausgewählt, dass sich jedenfalls theoretisch eine bzw. die gewünschte Soll-Faltenbildungsstärke gleich oder ggf. größer Null einstellt. In der Praxis kann es allerdings im Herstellprozess aufgrund diverser Prozesseinflüsse trotz der vorgenannten Einstellung solcher Standard-Zugkraftwerte dennoch zu unerwarteter Ist-Faltenbildungsstärke kommen, die dann - wie zuvor ausführlich dargestellt - durch die vorgenannte Faltenbildungsstärkenregelung unter Einbeziehung der sensortechnischen Erfassung der Ist-Faltenbildungsstärke auf das gewünschte Maß ausgeregelt wird.

Die im Prozess zunächst verwendeten Zugkraft-Standardwerte können beispielsweise einer oder der vorstehend genannten Datenbank entnommen werden, in der sie hinterlegt sein können. In der Datenbank können zu diesem Zweck, beispielsweise in Form einer Tabelle oder von Diagrammen, für unterschiedliche Folienbahnarten bzw. unterschiedliche Aufreißstreifenarten oder für unterschiedlichen Folienbahnart-/Aufreißstreifenart-Kombinationen jeweils zu unterschiedlichen (Soll-)Dehnungswerten oder (Soll-)Dehnungswertdifferenzen, die sich an einer spezifischen Folienbahn 13 bzw. einem spezifischen Aufreißstreifen 24 einstellen können oder sollen, jeweils diejenigen (Soll-)Zugkraftwerte für die spezifische Folienbahn 13 bzw. den spezifischen Aufreißstreifen 24 hinterlegt sein, die bei Einstellung derselben zu den entsprechenden Soll-Dehnungswerten bzw. (Soll-)Dehnungswertdifferenzen führen bzw. führen sollten.

Die hinterlegten Dehnungswert- bzw. Dehnungswertdifferenz/Zugkraftwert-Kombinationen können dabei zuvor mit Hilfe von spezifischen Materialkennwerten (insbesondere Breite, Dicke, E-Modul) der spezifischen Folienbahn 13 bzw. des spezifischen Aufreißstreifens 24 mit Hilfe an sich bekannter technischer Zusammenhänge errechnet bzw. bestimmt und anschließend abgespeichert worden sein. Die Bestimmung dieser Werte-Kombinationen bzw. der Abhängigkeiten zwischen Zugraftwerten und Dehnungswerten kann aber auch unmittelbar im Prozess automatisiert erfolgen anhand der vorgenannten Materialkennwerte, und zwar mithilfe geeigneter Berechnungsalgorithmen.

Insofern die Werte in der Tabelle hinterlegt sind, wählt der Regler 58 die für den Herstellprozess einzustellenden Zugkraftwerte nach Maßgabe der gewünschten Faltenbildungsstärke beispielsweise aus, indem er zunächst diejenigen Dehnungswerte für die Folienbahn 13 und den Aufreißstreifen 24 bestimmt, die zu der gewünschten Faltenbildungsstärke führen. Zu diesem Zweck können etwa in einer weiteren Tabelle zu unterschiedlichen Dehnungswertdifferenzen zwischen den Dehnungswerten der spezifischen Folienbahn 13 bzw. des spezifischen Aufreißstreifens 24 unterschiedliche Faltenbildungsstärken hinterlegt sein.

Wenn beispielsweise eine Faltenbildungsstärke von Null gewünscht ist, also keine Faltenbildung, wählt der Regler 58 für die Folienbahn 13 und den Aufreißstreifen 24 dann jeweils Zugkraftwerte aus, denen in der Tabelle übereinstimmende Dehnungswerte bzw. Dehnungswertdifferenzen von Null zugeordnet sind. Theoretisch sollte es in dem Fall zu keiner Faltenbildung kommen, insbesondere, wenn das System mit konstanter Geschwindigkeit läuft.

Falls ein gewisse Faltenbildungsstärke größer Null gewünscht ist, wählt der Regler 58 jeweils Zugkraftwerte aus, die Dehnungswerten bzw. Dehnungswertdifferenzen zugeordnet sind, die um eine bestimmte, dieser Faltenbildungsstärke entsprechende Differenz voneinander abweichen.

Auch auftretende Verzögerungs- und Beschleunigungsvorgänge der Folienbahn 13 und des Aufreißstreifens 24 können in die Regelung einbezogen werden. Das System muss dann definiert nachregeln. Es ist dabei vorstellbar, den Grad der Nachregelung, also die Werte entsprechender Nachregelparameter oder einen besonderen Nachregelalgorithmus, ebenfalls materialspezifisch, also abhängig von mindestens einem Materialkennwert des Aufreißstreifens und/oder der Folienbahn in der Datenbank zu hinterlegen und durch den Regler 58 auswählen zu lassen.

Weiter ist vorstellbar, bei dem Anfahren der Vorrichtung zunächst auch bei im späteren Prozess gewünschter Faltenbildungsstärke von Null Zugkraftwerte einzustellen, die einem Dehnungswertverhältnis > 1 entsprechen, um sicherzustellen, dass zur Faltenbildungsmessung das Sensoraggregat 30 verwendet werden kann. Anschließend könnte die Zugkräfte definiert so verändert werden, dass sich das Dehnungswertverhältnis in Richtung 1 verringert bzw. es könnte unmittelbar die beschriebene Faltenbildungsstärkenregelung die weitere Regelung übernehmen und die Zugkräfte nach Maßgabe der gemessenen Faltenbildungsstärke auf Null regeln.

## Patentansprüche

1. Verfahren zur Herstellung von Außenumhüllungen (11) für Verpackungen (10) für rauchbare Artikel mit darauf angeordnetem Aufreißstreifen (24), bei dem ein fortlaufender Aufreißstreifen (24) an einer Verbindungsstation (49) mit einer Seite (13.1) einer fortlaufenden Folienbahn (13) zu einer Verbundmaterialbahn (50) verbunden wird, wobei die Verbundmaterialbahn (50) oder einzelne Zuschnitte daraus stromab der Verbindungsstation (49) mit einem insbesondere elektrooptischen Prüforgan, bevorzugt einem Zeilensensor, im Hinblick auf die Bildung von Falten (55) überwacht wird, und wobei die Bahnspannung des Aufreißstreifens (24) unter der dieser der Verbindungsstation (49) zugeführt wird, automatisch verändert wird, um einer Faltenbildung (55) entgegenzuwirken, sollte das Prüforgan eine Faltenbildung (55) detektieren oder eine Faltenbildung (55), die ein vorgegebenes Maß überschreitet.

2. Verfahren gemäß Anspruch 1, **dadurch gekennzeichnet, dass** die Bahnspannung nach Maßgabe des Grades bzw. der Stärke der erfassten Faltenbildung (55) verändert wird, wobei bevorzugt als Maß für die Stärke der Faltenbildung (55) die Anzahl der Falten der Faltenbildung (55) pro Längeneinheit bestimmt wird und/oder Abmessungen von Falten der Faltenbildung (55), insbesondere der Erstreckung von Falten quer zur Längserstreckung der Verbundmaterialbahn (50) und/oder wobei bevorzugt abhängig von mindestens einem Materialkennwert der Folienbahn (13) und/oder abhängig von mindestens einem Materialkennwert des Aufreißstreifens (24) automatisch als Maß für die Stärke der Faltenbildung (55) entweder die Anzahl der Falten der Faltenbildung (55) pro Längeneinheit verwendet wird und/oder die Abmessungen von Falten der Faltenbildung (55).

3. Verfahren gemäß Anspruch 1, **gekennzeichnet durch** einen geschlossenen Regelkreis, bei dem die Bahnspannung des Aufreißstreifens (24) die Stellgröße ist, die nach Maßgabe der die Regelgröße bildenden Stärke der Faltenbildung (55) eingestellt wird, wobei bevorzugt der Regelungsalgorithmus und/oder mindestens ein Parameter der Regelung automatisch abhängig von mindestens einem Materialkennwert der Folienbahn (13) und/oder abhängig von mindestens einem Materialkennwert des Aufreißstreifens (24) aus einem elektronischen Speicher ausgewählt werden.

4. Verfahren gemäß Anspruch 2, **dadurch gekennzeichnet, dass** die Stärke der Faltenbildung (55) durch die Veränderung der Bahnspannung minimiert wird, oder dass sie verringert wird, bis sie einen vorbestimmten Grenzwert erreicht oder unterschreitet.

5. Verfahren gemäß Anspruch 1, **dadurch gekennzeichnet, dass** die Verbundmaterialbahn (50) durch das Prüforgan stromab eines Schneidorgans (28) überwacht wird, mit dem in die Folie (13) des Verbundmaterials (50) den Aufreißstreifen (24) der Verbundmaterialbahn (50) durchtrennende Einschnitte (27) eingebracht werden, wobei bevorzugt die Verbundmaterialbahn (50) durch das Prüforgan stromauf eines Trennorgans (15) überwacht wird, das die Verbundmaterialbahn (50) in einzelne Zuschnitte trennt, in die die Verpackungen (10) jeweils eingehüllt werden.

6. Verfahren gemäß Anspruch 1, **dadurch gekennzeichnet, dass** das Prüforgan die Verbundmaterialbahn (50) entlang des gedachten Zuschnitts mehrfach abtastet, dass aus den durch diese Mehrfachabtastung erfassten Messwerten ein Wert abgeleitet wird, der ein Maß für die Faltenbildung (55) ist, insbesondere der Mittelwert der Messwerte, und dass die Bahnspannung des Aufreißstreifens (24) nach Maßgabe dieses abgeleiteten Wertes verändert wird.

7. Verfahren gemäß Anspruch 1, **dadurch gekennzeichnet, dass** die Bahnspannung des Aufreißstreifens (24) durch Veränderung der auf die Folienbahn bzw. den Aufreißstreifen wirkenden Zugkraft verändert wird, insbesondere durch Veränderung von Einstellungen eines auf den Aufreißstreifen (24) einwirkenden Tänzersystems, wobei bevorzugt für den Standardbetrieb der Vorrichtung, insbesondere für das Anfahren der Vorrichtung, die auf den Aufreißstreifen (24) wirkenden Standard-Zugkräfte so eingestellt werden, dass die Differenz der Dehnungswerte, die sich an der Folienbahn (13) einerseits und dem Aufreißstreifen (24) andererseits einstellen bzw. einstellen sollten, Null ist oder einem vorbestimmten Wert größer Null entspricht, der zu einer gewünschten Faltenbildungsstärke größer Null führt bzw. führen sollte.

8. Vorrichtung zur Herstellung von Außenumhüllungen (11) für Verpackungen (10) für rauchbare Artikel mit darauf angeordnetem Aufreißstreifen (24), mit einer Verbindungsstation (49), an der ein fortlaufender Aufreißstreifen (24) mit einer Seite (13.1) einer fortlaufenden Folienbahn (13) zu einer Verbundmaterialbahn (50) verbindbar ist und mit einer Einrichtung (59, 60), mit der die Bahnspannung der der Verbindungsstation (49) zugeführten Aufreißstreifenbahn (24) variierbar ist. wobei die Vorrichtung ein stromab der Verbindungsstation (49) angeordnetes, insbesondere elektrooptisches Prüforgan, bevorzugt einen Zeilensensor, mit dem die Verbundmaterialbahn (50) oder einzelne Zuschnitte daraus im Hinblick auf die Bildung von Falten (55) überwachbar sind, umfasst und eine Regelungseinrichtung (58), die derart ausgebildet ist, dass sie die Einrichtung (59, 60) zur Variation der Bahnspannung der Aufreißstreifenbahn (24) nach Maßgabe der erfassten Faltenbildung (55) derart einstellt, dass einer Faltenbildung (55) entgegengewirkt wird, sollte mit dem Prüforgan eine Faltenbildung (55) detektiert werden oder eine Faltenbildung (55). die ein vorgegebenes Maß überschreitet.

## Claims

1. A method for producing outer wrappings (11) for packagings (10) for items that can be smoked, having a tear-open strip (24) arranged thereon, with which a continuous tear-open strip (24) is connected to a side (13.1) of a continuous film web (13) to form a composite material web (50) at a connecting station (49), wherein the composite material web (50) or individual cuts thereof is/are monitored downstream of the connecting station (49) with regard to the formation of folds (55) by means of an inspection instrument, which in particular is an electro-optical inspection instrument, preferably a line sensor, and wherein the web tension of the tear-open strip (24) under which the latter is fed to the connecting station (49) is automatically changed in order to counteract a fold formation (55) if the inspection instrument detects a fold formation (55) or a fold formation (55) that exceeds a predefined magnitude.

2. The method as claimed in claim 1, **characterized in that** the web tension is changed in accordance with the degree or the severity of the detected fold formation (55), wherein preferably as a measure for the severity of the fold formation (55), the number of folds of the fold formation (55) per length unit is determined and/or dimensions of folds of the fold formation (55), in particular the extension of folds transversely to the longitudinal direction of the composite material web (50), and/or wherein preferably either the number of folds of the fold formation (55) per length unit and/or the dimensions of folds of the fold formation (55) is/are automatically used as a measure for the severity of the fold formation (55), dependently on at least one material characteristic value of the film web (13) and/or dependently on at least one material characteristic value of the tear-open strip (24).

3. The method as claimed in claim 1, **characterized by** a closed control circuit, in which the web tension of the tear-open strip (24) is the manipulated variable that is adjusted in accordance with the severity of the fold formation (55) forming the control variable, wherein preferably the control algorithm and/or at least one parameter of the control is/are selected automatically from an electronic memory dependently on at least one material characteristic value of the film web (13) and/or dependently on at least one material characteristic value of the tear-open strip (24).

4. The method as claimed in claim 2, **characterized in that** the severity of the fold formation (55) is minimized by changing the web tension, or **in that** it is reduced until it reaches or falls below a predetermined limit value.

5. The method as claimed in claim 1, **characterized in that** the composite material web (50) is monitored by the inspection instrument downstream of a cutting instrument (28), with which incisions (27) severing the tear-open strip (24) of the composite material web (50) are made in the film (13) of the composite material (50), wherein preferably the composite material web (50) is monitored by the inspection instrument upstream of a separating instrument (15), which separates the composite material web (50) into individual cuts, in which the packagings (10) are wrapped in each case.

6. The method as claimed in claim 1, **characterized in that** the inspection instrument scans the composite material web (50) a number of times along the intended cut, **in that** a value that is a measure for the fold formation (55) is derived from the measured values detected by this multiple scanning and in particular is the mean value of the measured values, and **in that** the web tension of the tear-open strip (24) is changed in accordance with this derived value.

7. The method as claimed in claim 1, **characterized in that** the web tension of the tear-open strip (24) is changed by changing the tensile force acting on the film web or the tear-open strip, in particular by changing settings of a dancing system acting on the tear-open strip (24), wherein preferably for the standard operation of the device, in particular for starting the device, the standard tensile forces acting on the tear-open strip (24) are set such that the difference of the strain values that are set or should be set at the film web (13) on the one hand and the tear-open strip (24) on the other hand is zero or corresponds to a predetermined value greater than zero, which leads or should lead to a desired fold formation severity greater than zero.

8. A device for producing outer wrappings (11) for packagings (10) for items that can be smoked, having a tear-open strip (24) arranged thereon, having a connecting station (49), at which a continuous tear-open strip (24) can be connected to a side (13.1) of a continuous film web (13) to form a composite material web (50), and having an arrangement (59, 60), with which the web tension of the tear-open strip web (24) fed to the connecting station (49) can be varied, wherein the device comprises an inspection instrument arranged downstream of the connecting station (49), in particular an electro-optical inspection instrument, preferably a line sensor, with which the composite material web (50) or individual cuts therefrom can be monitored with regard to the formation of folds (55), and a control arrangement (58), which is designed in such a way that it sets the arrangement (59, 60) for varying the web tension of the tear-open strip web (24) in accordance with the detected fold formation (55) in such a way that a fold formation (55) is counteracted if the inspection instrument detects a fold formation (55) or a fold formation (55) that exceeds a predefined magnitude.

## Revendications

1. Procédé de fabrication d'enveloppes extérieures (11) pour des emballages (10) pour des articles pouvant être fumés sur lesquelles est disposée une bandelette d'arrachage (24), avec lequel une bandelette d'arrachage (24) continue est assemblée au niveau d'une station d'assemblage (49) avec un côté (13.1) d'une bande de film continue (13) pour former une bande de matière composite (50), la bande de matière composite (50) ou des coupes individuelles de celle-ci étant surveillées en aval de la station d'assemblage (49) avec un organe de contrôle, notamment électro-optique, de préférence un capteur linéaire, afin de détecter un éventuel grignage (55) et la tension de bande de la bandelette d'arrachage (24) sous laquelle celle-ci est acheminée à la station d'assemblage (49) étant modifiée automatiquement en vue de s'opposer à un grignage (55) si l'organe de contrôle devait détecter un grignage (55) ou un grignage (55) qui dépasse une cote prédéfinie.

2. Procédé selon la revendication 1, **caractérisé en ce que** la tension de bande est modifiée en fonction du degré ou de l'intensité du grignage (55) détecté, la mesure définie pour l'intensité du grignage (55) étant de préférence le nombre de plis du grignage (55) par unité de longueur et/ou les dimensions des plis du grignage (55), notamment la projection des plis transversalement par rapport à la projection longitudinale de la bande de matière composite (50) et/ou soit le nombre de plis du grignage (55) par unité de longueur et/ou les dimensions des plis du grignage (55) étant de préférence utilisés automatiquement comme mesure de l'intensité du grignage (55) en fonction d'au moins une caractéristique de matière de la bande de film (13) et/ou en fonction d'au moins une caractéristique de matière de la bandelette d'arrachage (24) .

3. Procédé selon la revendication 1, **caractérisé par** un circuit de régulation fermé, avec lequel la tension de bande de la bandelette d'arrachage (24) est la grandeur de réglage, laquelle est réglée en fonction de l'intensité du grignage (55) formant la grandeur de régulation, l'algorithme de régulation et/ou au moins un paramètre de la régulation étant de préférence sélectionnés à partir d'une mémoire électronique automatiquement en fonction d'au moins une caractéristique de matière de la bande de film (13) et/ou en fonction d'au moins une caractéristique de matière de la bandelette d'arrachage (24).

4. Procédé selon la revendication 2, **caractérisé en ce que** l'intensité du grignage (55) est minimisée par la modification de la tension de bande ou **en ce qu'**elle est réduite jusqu'à ce qu'elle devienne égale ou inférieure à une valeur limite prédéfinie.

5. Procédé selon la revendication 1, **caractérisé en ce que** la bande de matière composite (50) est surveillée par l'organe de contrôle en aval d'un organe de coupe (28) avec lequel des entailles (27) qui sectionnent les bandelettes d'arrachage (24) de la bande de matière composite (50) sont pratiquées dans le film (13) de la matière composite (50), la bande de matière composite (50) étant de préférence surveillée par l'organe de contrôle en amont d'un organe de séparation (15) qui sépare la bande de matière composite (50) en coupes individuelles dans lesquelles sont respectivement enveloppés les emballages (10).

6. Procédé selon la revendication 1, **caractérisé en ce que** l'organe de contrôle palpe plusieurs fois la bande de matière composite (50) le long de la coupe imaginaire, **en ce qu'**une valeur est dérivée des valeurs mesurées acquises par ce palpage multiple, laquelle est une mesure du grignage (55), notamment la valeur moyenne des valeurs mesurées, et **en ce que** la tension de bande de la bandelette d'arrachage (24) est modifiée en fonction de cette valeur dérivée.

7. Procédé selon la revendication 1, **caractérisé en ce que** la tension de bande de la bandelette d'arrachage (24) est modifiée en modifiant la force de traction qui agit sur la bande de film ou sur la bandelette d'arrachage, notamment en modifiant les réglages d'un système compensateur qui agit sur la bandelette d'arrachage (24), les forces de traction standard qui agissent sur la bandelette d'arrachage (24) étant de préférence réglée pour le fonctionnement standard du dispositif, notamment pour le démarrage du dispositif, de telle sorte que la différence entre les valeurs d'allongement qui s'établissent, ou devraient s'établir, au niveau de la bande de film (13) d'un côté et de la bandelette d'arrachage (24) de l'autre côté soit nulle ou corresponde à une valeur prédéfinie supérieure à zéro qui donne lieu ou devrait donner lieu à une intensité de grignage souhaitée supérieure à zéro.

8. Dispositif de fabrication d'enveloppes extérieures (11) pour des emballages (10) pour des articles pouvant être fumés sur lesquelles est disposée une bandelette d'arrachage (24), comprenant une station d'assemblage (49) au niveau de laquelle une bandelette d'arrachage (24) continue peut être assemblée avec un côté (13.1) d'une bande de film continue (13) pour former une bande de matière composite (50), et comprenant un appareil (59, 60) qui permet de faire varier la tension de bande de la bandelette d'arrachage (24) qui est acheminée à la station d'assemblage (49), le dispositif comprenant un organe de contrôle disposé en aval de la station d'assemblage (49), notamment électro-optique, de préférence un capteur linéaire, avec lequel la bande de matière composite (50) ou des coupes individuelles de celle-ci peuvent être surveillées afin de détecter une éventuelle formation de plis (55), et un appareil de régulation (58) qui est configuré de telle sorte qu'il règle l'appareil (59, 60) de variation de la tension de bande de la bandelette d'arrachage (24) en fonction du grignage (55) détecté de telle sorte qu'il se produit une opposition à un grignage (55) si l'organe de contrôle devait détecter un grignage (55) ou un grignage (55) qui dépasse une cote prédéfinie.
